# EUROPEAN PATENT SPECIFICATION

(11) **EP 1 959 235 B1**
(45) Date of publication and mention of the grant of the patent: **08.08.2012**
(21) Application number: 08151257.6
(22) Date of filing: 11.02.2008
(51) Int. Cl.: G01C 21/32

(54) **Road map data structure and navigation apparatus**
Straßenkartendatenstruktur und Navigationsvorrichtung
Structure de données de carte routière et appareil de navigation

(30) Priority: 13.02.2007 JP 2007032351
(43) Date of publication of application: 20.08.2008
(73) Proprietor: Aisin AW Co., Ltd., Fujii-cho Anjo-shi, Aichi 444-1192 (JP)
(72) Inventor: Takahata, Seiji c/o Aisin AW Co., Ltd.,, Aichi 444-8564 (JP); Nakamura, Motohiro c/o Toyota Jidosha Kabushiki Kaisha, Aichi-ken 471-8571 (JP)
(74) Representative: Vossius & Partner

(56) References cited:
- EP-A1- 1 111 336
- EP-A2- 1 098 168
- FR-A1- 2 882 846

## Description

The present invention relates to a road-map-data configuration that is used in, for example, a navigation apparatus, and that has road-network data representing roads. The present invention also relates to a navigation apparatus having application programs that utilize the road-map-data configuration.

In a navigation apparatus or the like, the technology for, for example, performing an operation of displaying the location of the navigation apparatus or performing guidance for a route to a destination, using road-map data showing information concerning actually existing roads, has been known. Such road-map data configured as digital data includes road-network data configured to have combinations of nodes and links. Generally, the nodes are coordinate points representing intersections of roads, curve points, or the like. The links connect between the nodes. Accordingly, a road network that represents roads using the connection relationships among the links is configured.

A piece of link information showing an attribute of each of the links is provided for the link. The attribute is, for example, a link number, coordinates of the start point and the endpoint of the link, a length corresponding to the link, a type or a classification of a road corresponding to the link, the width of the road, traffic regulation, or the like (for example, see Paragraph 17, 18, or the like of JP-A-6-323861).

EP 1 111 336 A1 discloses an advanced driver assistance system architecture. The map database of the driver assistance system includes a primary database and a supplementary database that includes higher quality data than the primary database. Instead of using two separate databases a single database can be used. The single database contains both higher accuracy data and lower accuracy data. A means is provided to indicate whether a represented road segment is represented by higher accuracy data or by lower accuracy data.

FR 2 882 846 A1 discloses generating intermediate points between two nodes. The number of intermediate points is related to the resolution of the map. The number of intermediate points is also related to the particular application and the precision required for this application

An accuracy level included in such a piece of link information is different for the accuracy of each source used to collect data for an attribute. More particularly, attributes that are various types of lengths obtained by measuring actually existing roads, such as coordinates of a node used as the starting point or the endpoint of a link, and a length corresponding to a link, are easily influenced by the accuracy of each source. Examples of a source include a topographic map, a town map, a city-planning map, a road map, an aerial photograph, measured data that is measured by a measuring vehicle traveling along roads. In the related art, even when data is collected for an attribute of links for different accuracy levels from appropriate sources in accordance with severity, such as a frequency in the use of a road corresponding to each of the links, the road-network data is configured using pieces of link information having a single accuracy level. In other words, in the road-network data in the related art, even when a piece of link information is generated on the basis of a source with a high accuracy, the piece of link information is round off at the same accuracy level as that of a piece of link information generated on the basis of a source with a low accuracy.

However, recently, the utilization of the road-network data, which includes significant information, for a plurality of applications other than an application of a general navigation apparatus in the related art has been strongly demanded. For example, the utilization of the road-network data for another application capable of improving the amenities or the safety of an automobile in which a navigation apparatus is mounted has been demanded. Some of these applications have to use a piece of link information with an accuracy higher than that used for the application of a general navigation apparatus in the related art. Even the application of a general navigation apparatus in the related art may perform, for example, more detailed guidance using a piece of link information with a high accuracy. However, when information with a high accuracy is used for all pieces of link information included in the road-map data, unfortunately, that causes the increase in cost for collecting information, or the increase in the data amount of the road-map database. Accordingly, it is necessary to generate a piece of link information by making the most of the accuracy of each source to configure the road-network data.

It is an object of the present invention to provide a road-map-data configuration that is capable of including pieces of link information showing a plurality of accuracy levels based on the accuracies of sources to appropriately configure road-network data, and that is capable of using the road-network data on the basis of an accuracy level shown in each of the pieces of link information.

A road-map-data configuration according to an aspect of the present invention includes road-network data representing roads using connection relationships among a plurality of links, and link information concerning the links used to configure the road network data. The link information includes accuracy level information based on the accuracy of a source of the link information.

The road-map-data configuration includes the accuracy level information based on the accuracy of a source of the link information. Accordingly, the road-network data can be appropriately configured using pieces of link information showing a plurality of accuracy levels. Additionally, an application program that uses the road-network data included in the road-map-data configuration can read an accuracy level for each piece of link information from the road-network data. For this reason, for example, the application program that uses the road-network data can determine for each piece of link information whether the road-network data can be used or not. Accordingly, since the road-network data can be used on the basis of the accuracy level shown in each piece of link information, the range of types of application programs that can use one road-network data can be extended.

In the road-map-data configuration according to the aspect of the present invention, the accuracy level information is information showing a level value predetermined on the basis of the accuracy of each of various types of sources.

In this aspect, the accuracy level information included in the link information is provided as information showing a quantitatively predetermined level value. In other words, in a case of different sources, when the sources have the same accuracy, it can be described that they have the same level of accuracy. Accordingly, the amount of the link information can be constantly maintained in a range of the level value without being influenced by the variety of sources. When the number of the types of sources is increased in the future, the link information can be updated without increasing the amount thereof.

In the road-map-data configuration according to the aspect of the present invention, the link information includes density information that is determined on the basis of an accuracy level shown in the accuracy level information and that describes the placement density of interpolation points (shape points) for interpolating formations (shapes) of the links, and interpolation-point-offset coordinates that are represented using offset values defined between adjacent interpolation-points to show the formations of the links.

The interpolation points are coordinate points for interpolating the formations of the links. For this reason, a case in which the accuracy of a source is high and the accuracy level of link information is high is preferable for disposing the interpolation points in a high density. Conversely, when the accuracy of a source is low, information obtained from the source is insufficient to dispose the interpolation points in a high density. In such a case, the interpolation points can be disposed only at dummy positions to achieve the disposition in a high density. As a result, the amount of link information is unnecessarily increased. However, in this aspect, since the density information concerning the interpolation points is determined on the basis of the accuracy level shown in the accuracy level information, the interpolation points can be appropriately disposed without being inefficiently disposed.

Additionally, because the density information and information concerning offset are separately defined, a unified offset unit for interpolation-point-offset coordinates can be used for links having different density information. For example, by setting one as an offset unit that is common to all of the links, the amount of data can be reduced.

In the road-map-data configuration according to the aspect of the present invention, the link information includes density information that is determined on the basis of an accuracy level shown in the accuracy level information and on the basis of formations of the links and that describes the placement density of interpolation points for interpolating the formations of the links, and interpolation-point-offset coordinates that are represented using offset values defined between adjacent interpolation-points to show the formations of the links.

When the formations of the links are not lines or curves with fixed curvatures but highly irregular formations, it is preferable that the interpolation points which are coordinate points for interpolating the formations of the links be set in a high density. A case in which the accuracy of a source is high and the accuracy level of link information is high is preferable for disposing the interpolation points in a high density. In a case in which the links have a regular formation, such as a line, there is a high probability that the interpolation points do not have to be disposed in a high density even when the accuracy of a source is high. In other words, the disposition of the interpolation points in a high density may cause the unnecessary increase in the amount of the link information. Conversely, when the accuracy of a source is low, information obtained from the source is insufficient to dispose the interpolation points in a high density. In such a case, the interpolation points can be disposed only at dummy positions to achieve the disposition in a high density. As a result, the amount of link information is unnecessarily increased. However, in this aspect, since the placement density of the interpolation points is determined on the basis of the accuracy level shown in the accuracy level information and on the basis of the formations of the links, the interpolation points can be appropriately disposed without being inefficiently disposed.

In the road-map-data configuration according to the aspect of the present invention, the density information is represented using a magnification for the placement density of the interpolation points disposed in the highest density, and is represented as an exponent for the magnification defined as a power of two.

For example, when the magnification for the placement density of the interpolation points disposed in the highest density is eight, the magnification can be represented as three, which is an exponent for the magnification (8 = 2³) defined as a power of two. Although four bits are necessary to represent an 8× magnification in binary numbers, three, which is an exponent of the power of two, can be represented using two bits. In other words, by representing the magnification for the placement density as an exponent of a power of two, the amount of data can be reduced to one-half. Although only two bits can be reduced for one of the links, a large positive effect made by the reduction can be obtained for the whole road-network data.

A navigation apparatus according to an aspect of the present invention includes: a map database that has the road-map-data configuration according to the aspect of the present invention and that stores the road-network data; an apparatus-location-detection unit that detects a location of the navigation apparatus; and a plurality of application programs that run with reference to the road-network data. Each of the application programs is executed on the basis of a required accuracy level necessary for the application program, and is executed using the link information having the accuracy level information showing the accuracy level higher than the required accuracy level.

As described above, the road-map-data configuration according to the aspect of the present invention includes the accuracy level information based on the accuracy of a source of the link information. Accordingly, each of the application programs that run with reference to the road-network data included in the road-map-data configuration can be executed on the basis of a required accuracy level necessary for the application program, using the link information having the accuracy level information showing the accuracy level higher than the required accuracy level. The application that uses the road-network data can determine for each piece of link information whether the road-network data can be used or not. Accordingly, since the road-network data can be used on the basis of the accuracy level shown in each piece of link information, the range of types of application programs that can use one road-network data is not limited but can be extended.
Embodiments of the present invention will be described with reference to the accompanying drawings.

Fig. 1 is a schematic block diagram showing the configuration of a navigation apparatus according to an embodiment of the present invention.

Fig. 2 is an illustration of an example of a road network.

Fig. 3 is an illustration of an example of the relationship between a source of link information and an accuracy level or an application.

Fig. 4 is an illustration of an example of the relationship between the placement density of interpolation points and density information concerning the interpolation points.

Fig. 5 is an illustration of an example of the relationship between the source of link information and the accuracy level or the density information concerning the interpolation points.

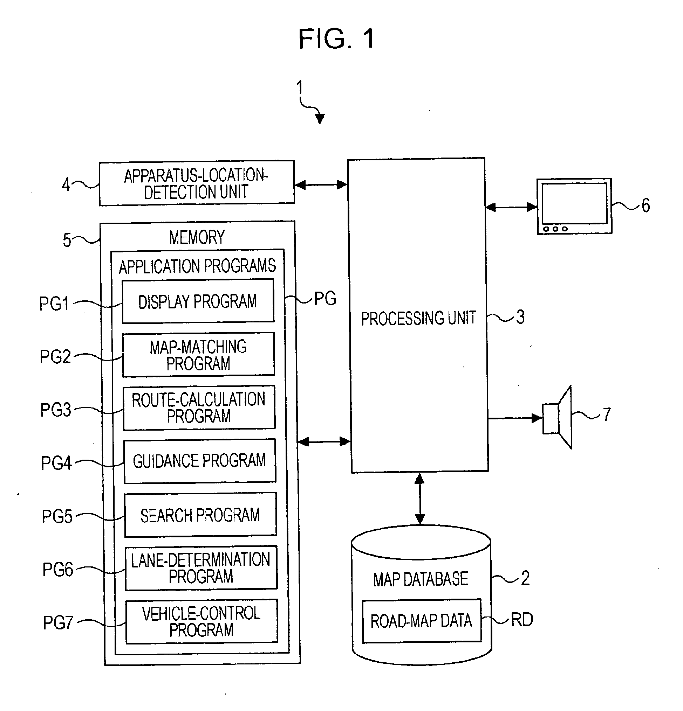

Fig. 1 is a schematic block diagram showing the configuration of a navigation apparatus according to an embodiment of the present invention. A navigation apparatus 1 includes a plurality of application programs that run with reference to road-network data included in a road-map-data configuration according to the embodiment of the present invention. By using these application programs, the navigation apparatus 1 can realize navigation functions including apparatus-location display, destination search, search for a route from a starting point to a destination, course guidance to a destination.

As shown in Fig. 1, the navigation apparatus 1 has function units including a map database 2, a processing unit 3, an apparatus-location-detection unit 4, a memory 5, a display unit 6, and a sound-output unit 7. Each of the function units is configured to use the processing unit 3, which is configured to have a microprocessor, a digital signal processor (DSP), or the like, as a core unit. Alternatively, a part or all of the function units including the map database 2, the apparatus-location-detection unit 4, the memory 5 may be built in the microprocessor or the DSP. Each of the function units is configured to be implemented in hardware, software (a program), or both of hardware and software.

Application programs PG include a plurality of programs, namely, PG1 to PG7. In this embodiment, the application programs PG include seven programs, i.e., a display program PG1, a map-matching program PG2, a route-calculation program PG3, a guidance program PG4, a search program PG5, a lane-determination program PG6, and a vehicle-control program PG7.

The display program PG1 is a program for, for example, displaying a map showing the vicinity of the location of the apparatus, the vicinity of a destination, or the like, or displaying the location of the apparatus on the map, on a display screen of the display unit 6. The map-matching program PG2 is a program for performing a map matching process in which the location of the apparatus detected by the apparatus-location-detection unit 4 is matched to a road of the map. The route-calculation program PG3 is a program for calculating, for example, a route from the location of the apparatus to the destination that is input through the display unit 6. The guidance program PG4 is a program for performing guidance of an appropriate route on the basis of the route to the destination, which is determined from the route calculation, using guidance display provided on the display screen of the display unit 6 or sound guidance provided by the sound-output unit 7. The search program PG5 is a program for searching for the destination, a point used for display on the map, or the like on the basis of an address, a phone number, the name of a facility, a genre, or the like.

The lane-determination program PG6 and the vehicle-control program PG7 are used particularly in a case where the navigation apparatus 1 is mounted in an automobile. The lane-determination program PG6 is a program for determining which of lanes of a road a vehicle is traveling in. The lane-determination program PG6 may have a function of outputting information to an operation-control apparatus of the vehicle in order to keep traveling in the determined lane. The vehicle-control program PG7 is a program for outputting information used to assist an operation, such as deceleration for a stop line or the like, or adjustment of a stop position, to the operation-control apparatus of the vehicle.

The functions of the navigation apparatus 1, or the functions of the operation-control apparatus, which are realized using the above-described programs, have been known. Accordingly, the description of the details of the functions is omitted.

The map database 2 is a database in which road-map data RD (road-network data), which the processing unit 3 that executes the application programs PG described below refers to, is stored. The road-map data RD has a distinctive road-map-data configuration according to the embodiment of the present invention. The map database 2 is configured to have a storage medium, such as a disk (an optical disk, a magnetic disk, or a magneto-optical disk) or a memory, and a reader, such as a disk drive, as hardware.
It is preferable that the storage medium be a rewritable medium, such as a hard disk or a flash memory, so that the road-map data RD can be easily updated.

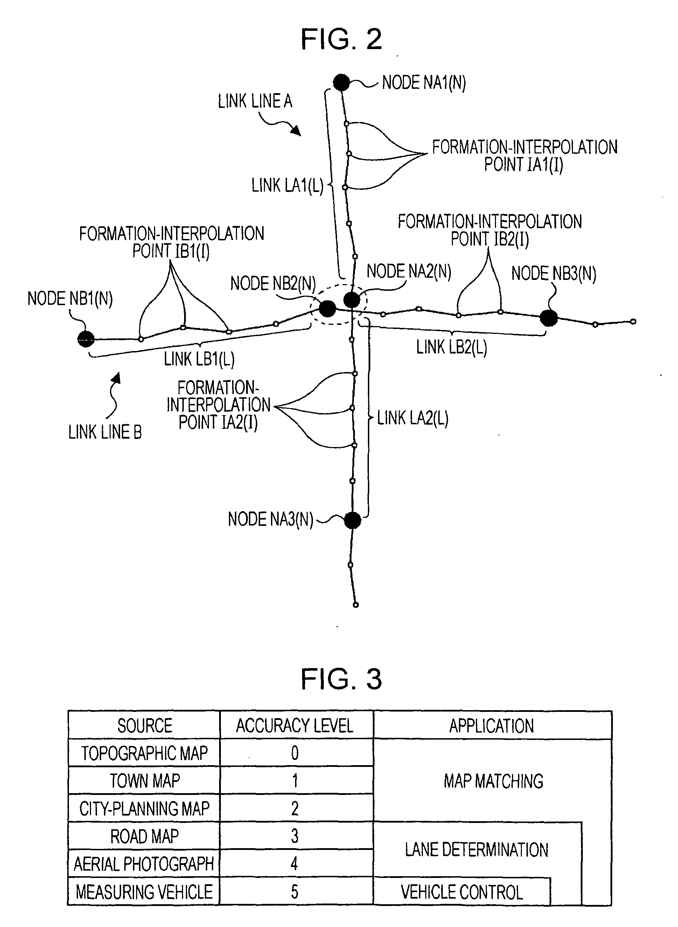

In the map database 2, not only the road-map data RD but also various types of data (data for guidance) that are used for display, guidance, search, or the like in the application programs PG, are stored. More specifically, these data are configured to include image data, sound data, data of points of interest (POI). Each of the data is stored in association with, for example, links and nodes, which are described below with reference to Fig. 2, included in the road-map data RD.

Fig. 2 is an illustration of an example of a road network expressed using the road-map data RD. In the example shown in Fig. 2, there are two link lines, namely, link lines A and B, each of which has a plurality of links L. The link line A is configured to include nodes N (NA1 to NA3 represented by black points in Fig. 2), links L each of which connects between two nodes N (LA1 and LA2 represented by solid lines in Fig. 2), and a group of formation-interpolation points I that define the formation of each of the links L (IA1 and IA2 represented by empty points in Fig. 2). Similarly, the link line B is configured to include nodes N (NB1 to NB3 represented by black points in Fig. 2), links L each of which connects between two nodes N (LB1 and LB2 represented by solid lines in Fig. 2), and a group of formation-interpolation points I that define the formation of each of the links L (IB1 and IB2 represented by empty points in Fig. 2). The road-map data RD is data showing information indicating the configuration of these link lines.

Each of the links L constituting the link lines has a piece of link information concerning the link L, such as an attribute of the link L. For example, the link LA1 of the link line A has, at least attribute information that the link LA1 has the node NA1 as the starting point, the node NA2 as the endpoint, and five formation-interpolation points I disposed at predetermined spacings. Although the details will be described below, the piece of link information includes a piece of accuracy level information showing an accuracy level of the link L, settings of predetermined spacings used to dispose formation-interpolation points I, or the like. Additionally, the formation-interpolation points I represent interpolation points according to the embodiment of the present invention, and the settings of predetermined spacings represent a piece of density information according to the embodiment of the present invention.

Although the node NA2 of the link line A and the node NB2 of the link line B are shown at different positions in Fig. 2, the nodes NA2 and NB2 are the same node N representing the same crossing. Accordingly, in the road-map data RD, data corresponding to the node N is managed for each of the link lines A and B. In other words, data corresponding to the node N representing the same crossing is stored for each of the link lines A and B. Additionally, the data corresponding to the node N representing the same crossing includes placement information concerning data corresponding to the other nodes N representing the same crossing.

Now referring back to Fig. 1, the apparatus-location-detection unit 4 is a function unit for detecting the present location of the navigation apparatus 1. For this reason, the apparatus-location-detection unit 4 has, for example, a global positioning system (GPS) receiver, an orientation sensor, a distance sensor, which are not shown in Fig. 1, or the like. The apparatus-location-detection unit 4 generates or obtains information concerning the coordinates of the present location, information concerning the direction of travel, or the like on the basis of information acquired by such a device, and outputs the information to the processing unit 3.

The display unit 6 has the display screen included in a display device, such as a cathode-xay tube (CRT) display or a liquid crystal display, and has also a touch panel or a control switch, which is operatively connected to this display screen. The sound-output unit 7 is configured to have a speaker, an amplifier, or the like. The display unit 6 and the sound-output unit 7 may be mounted in the same display device. The display unit 6 and the sound-output unit 7 are connected to the processing unit 3, and perform a display and a sound output, respectively, which are based on processes including a process in which the location of the apparatus is specified, a process in which a route between two points is searched, a process in which route guidance is performed, a process in which the destination is searched, in accordance with operations of the processing unit 3. The display unit 6, which includes a touch panel or a control switch, has also a function serving as a control-input unit that accepts a control input provided by a user and that transmits the content of the control input to the processing unit 3.

As described above, the navigation apparatus 1 includes the application programs PG that run with reference to the road-map data RD having the road-map-data configuration according to the embodiment of the present invention. Each of the application programs PG1 to PG7 is executed by the processing unit 3 on the basis of a required accuracy level necessary for the application program, using a piece of link information having a piece of accuracy level information showing an accuracy level higher than the required accuracy level. The piece of accuracy level information will be described below.

Road-map information is generated on the basis of a topographic map that is a basic map, a town map or a city-planning map whose scale is larger than that of the topographic map, a road map with specifications of roads, an aerial photograph or a satellite photograph that is taken from a high altitude, measured data (hereinafter, referred to as a "measuring vehicle") that is measured by the measuring vehicle traveling along roads, and so forth. The topographic map, the town map, the city-planning map, the road map, the aerial photograph, the measuring vehicle, and so forth are sources of pieces of link information concerning the links L configuring the road network. The accuracies of information (the pieces of link information) for roads (links) are different for the types of sources. For example, because the topographic map is drawn in a scale of 1 to 25000 in Japan, the accuracy of the topographic map is lower than that of the town map or the city-planning map. The accuracy of the road map or the aerial photograph is higher than that of the town map or the city-planning map, but is lower than that of the data measured by the measuring vehicle traveling.

If the measuring vehicle travels along all of the roads corresponding to the links L to measure data, all of the road-map data RD can be configured to have pieces of link information with a high accuracy. However, the travel of the measuring vehicle along all of the roads is not realistic in view of time or cost. Additionally, data with an accuracy as high as that of the data measured by the measuring vehicle is not necessary to execute programs of general navigation functions, such as apparatus-location display, map matching, route calculation, and guidance (hereinafter, appropriately referred to as "map matching"). In contrast, data with a high accuracy is necessary to execute programs related to vehicle travel control, such as control for keeping in a travel lane or assistance for stopping at a stop line.

For this reason, in this embodiment, the road-map-data configuration in which a piece of link information concerning the links L configuring the road-map data RD has a piece of accuracy level information based on the accuracy of the source of the piece of link information is provided.

Each of the application programs PG1 to PG7 runs on the basis of a required accuracy level necessary for the application program, using a piece of link information including a piece of accuracy level information showing an accuracy level higher than the required accuracy level.

Fig. 3 is an illustration of an example of the relationship between a source of a piece of link information and an accuracy level or an application. Referring to Fig. 3, an example in which accuracy levels are set in steps of one level in correspondence with the above-described sources is shown. In other words, pieces of accuracy level information are information concerning level values predetermined on the basis of accuracies that are different for the types of sources. In this example, an accuracy level 0 is the lowest accuracy level, and an accuracy level 5 is the highest accuracy level. This example is only an example, and the settings of accuracy levels or the number of the steps of accuracy levels are not limited to those in this example.

In this example, for a piece of link information whose source is the topographic map that is a basis map, the accuracy level 0 is set on the basis of the accuracy of the topographic map. For a piece of link information whose source is the town map, an accuracy level 1 is set on the basis of the accuracy of the town map. For a piece of link information whose source is the city-planning map, an accuracy level 2 is set on the basis of the accuracy of the city-planning map. For a piece of link information whose source is the road map, an accuracy level 3 is set on the basis of the accuracy of the road map. For a piece of link information whose source is the aerial photograph, an accuracy level 4 is set on the basis of the accuracy of the aerial photograph. For a piece of link information whose source is the measuring vehicle, the accuracy level 5 is set on the basis of the accuracy of the measuring vehicle.

A required accuracy level necessary for each of the application programs PG1 to PG7 is, for example, a corresponding one of accuracy levels described below.

As described above, for the map matching or the like that is a general navigation function, data with an accuracy as high as that of the data measured by the measuring vehicle is not necessary. In contrast, for lane determination for keeping in a travel lane, data with an accuracy higher than that used for the map matching or the like is necessary. For vehicle control, such as assistance for stopping at a stop line, data with an accuracy much higher than that used for the lane determination is necessary.

Accordingly, the map-matching program PG2 from among the application programs PG1 to PG7 in this example can be executed using a piece of link information having an accuracy level shown in a piece of accuracy level information that is equal to or higher than zero as shown in Fig. 3. Additionally, although not shown in Fig. 3, required accuracy levels for the display program PG1, the route-calculation program PG3, the guidance program PG4, and the search program PG5 are lower than the accuracy level for the map-matching program PG2. Accordingly these application programs can be executed using a piece of link information having an accuracy level equal to or higher than zero.

The lane-determination program PG6 can be executed using a piece of link information having an accuracy level shown in a piece of accuracy level information that is equal to or higher than three shown in Fig. 3.

The vehicle-control program PG7 can be executed using a piece of link information having an accuracy level shown in a piece of accuracy level information that is equal to or higher than five shown in Fig. 3.

For example, when the vehicle is traveling along a road corresponding to a link with the accuracy level 5 shown in a piece of accuracy level information, all of the application programs PG1 to PG7 can be executed. However, when the vehicle is traveling along a road corresponding to a link with the accuracy level 3 or 4, it is difficult to execute the vehicle-control program PG7. When the vehicle is traveling along a road corresponding to a link with an accuracy level equal to or lower than the accuracy level 2, it is difficult to execute the lane-determination program PG6 as well as the vehicle-control program PG7, and only the application programs PG1 to PG5 can be executed as in the case of a normal navigation apparatus. Additionally, it is preferable that the navigation apparatus 1 be configured to report the increase or decrease in the number of executable application programs to the user after the vehicle moving to a road corresponding to a link with a different accuracy level. Accordingly, by utilizing a piece of accuracy level information, various types of applications can be provided for the user in addition to normal navigation functions.

A piece of link information includes the formation-interpolation points I for interpolating and defining the formations of the links L as described above. When the formations of the links L are not lines or curves with fixed curvatures but highly irregular formations, it is preferable that the formation-interpolation points I that are coordinate points for interpolating the formations of the links L be set in a high density. A case in which the accuracy of a source is high and the accuracy level of a piece of link information is high is preferable for disposing the formation-interpolation points I in a high density. Conversely, when the accuracy of a source is low, information obtained from the source is insufficient to dispose the formation-interpolation points I in a high density. In such a case, the formation-interpolation points I can be disposed only at dummy positions to archive the disposition in a high density. As a result, the amount of a piece of link information is unnecessarily increased. Accordingly, in this embodiment, a piece of link information is determined on the basis of an accuracy level, and includes a piece of density information describing the placement density of the formation-interpolation points I for interpolating and defining the formations of the links L.

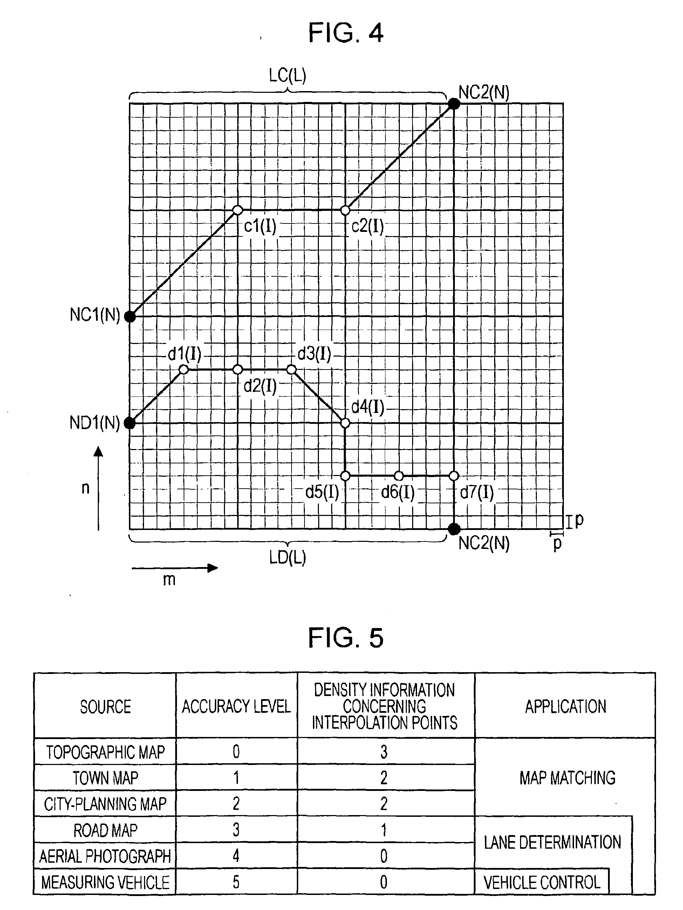

Fig. 4 is an illustration of an example of the relationship between the placement density of the interpolation points I and a piece of density information concerning the interpolation points I. The mesh shown in Fig. 4 represents a coordinate map showing spacings p obtained in a case where the formation-interpolation points I are disposed in the highest density. In the mesh shown in Fig. 4, thick lines are drawn for every eight spacings p on the coordinate map. Referring to Fig. 4, two links, namely, links LC and LD, are shown as examples. Regarding the link LC, the starting point is a node NC1, and the endpoint is a node NC2. Additionally, the link LC is shown as an example in which formation-interpolation points I (c1 and c2) are disposed in a low density. Regarding the link LD, the starting point is a node ND1, and the endpoint is a node ND2. Additionally, the link LD is shown as an example in which formation-interpolation points I (d1 to d7) are disposed in a density higher than that of the link LC.

On the link LC, the formation-interpolation points I are disposed at every eight spacings p in the n direction and the m direction. On the link LD, the formation-interpolation points I are disposed every four spacings p in the n direction and the m direction. Additionally, for each of the formation-interpolation points I, offset values between adjacent formation-interpolation points I are determined so that the formation-interpolation point I can have offset coordinates indicating the formation of the link L including the formation-interpolation point I.

For example, the formation-interpolation point c1 is adjacent to the node NC1 serving as an adjacent formation-interpolation point, which is the starting point of the link LC, in a direction from the starting point of the link LC to the endpoint. More specifically, the formation-interpolation point c1 is positioned at eight spacings p in the m direction and eight spacings p in the n direction from the node NC1 that is the starting point. Accordingly, interpolation-point-offset coordinates (m, n) of the formation-interpolation point c1 are represented as (8, 8). Similarly, the formation-interpolation point c2 is positioned at eight spacings p in the m direction and zero spacings p in the n direction from the formation-interpolation point c1 adjacent to the formation-interpolation point c2. Accordingly, interpolation-point-offset coordinates (m, n) of the formation-interpolation point c2 are represented as (8, 0).

The placement density of the formation-interpolation points I on the link LC is low, and the spacing between the formation-interpolation points I on the link LC is equivalent to eight spacings p in the mesh. Accordingly, when the placement density of the formation-interpolation points I on the link LC is taken into consideration, the formation-interpolation point c1 is positioned at one in the m direction and one in the n direction from the node NC1 that is the starting point, where one unit is equivalent to eight spacings p (= p×8). Similarly, the formation-interpolation point c2 is positioned at one in the m direction and zero in the n direction from the formation-interpolation point c1, where one unit is equivalent to eight spacings p. Accordingly, when the placement density of the formation-interpolation points I on the link LC is taken into consideration, the interpolation-point-offset coordinates of the formation-interpolation point c1 are represented as (1, 1), and the interpolation-point-otfset coordinates of the formation-interpolation point c2 are represented as (1, 0). Thus, a piece of density information concerning the formation-interpolation points I of the link LC is information defining eight spacings p as the placement density of the formation-interpolation points I of the link LC.

The formation-interpolation point d4 of the link LD is adjacent to the formation-interpolation point d3 in a direction from the starting point of the link LD to the endpoint. More specifically, the formation-interpolation point d4 is positioned at four spacings p in the m direction and negative four spacings p in the n direction from the formation-interpolation point d3. Accordingly, the interpolation-point-offset coordinates of the formation-interpolation point d4 are represented as (4, -4). Similarly, the interpolation-point-offset coordinates of the formation-interpolation point d5 are represented as (0, -4).

The placement density of the formation-interpolation points I on the link LD is higher than that of the formation-interpolation points I on the link LC, and the spacing between the formation-interpolation points I on the link LD is equivalent to four spacings p, each of which is the smallest spacing in the mesh. Accordingly, when the placement density of the formation-interpolation points I on the link LD is taken into consideration, the formation-interpolation point d4 is positioned at one in the m direction and negative one in the n direction from the formation-interpolation point d3, where one unit is equivalent to four spacings p (= p×4). Similarly, the formation-interpolation point d5 is positioned at one in the m direction and negative one in the n direction from the formation-interpolation point d4, where one unit is equivalent to four spacings p. Accordingly, when the placement density of the formation-interpolation points I on the link LD is taken into consideration, the interpolation-point-offset coordinates of the formation-interpolation point d4 are represented as (1, -1), and the interpolation-point-offset coordinates of the formation-interpolation point d5 are represented as (0, -1). Thus, a piece of density information concerning the formation-interpolation points I of the link LD is information defining four spacings p as the placement density of the formation-interpolation points I of the link LD.

As described above, when the interpolation-point-offset coordinates are represented in consideration of the placement density of the formation-interpolation points I, all interpolation-point-offset coordinates can be represented using three values, which are 0, 1, and negative 1. In other words, all interpolation-point-offset coordinates can be defined using set unit movements, which are 0, 1, and negative 1, without considering the number of spacings between the formation-interpolation points I. By using the set unit movements that are offset units common to all of the links, the interpolation-point-offset coordinates can be represented using four bits, which are a sum of two bits in the m direction and two bits in the n direction. Because the placement density is set for each of the links L and the link L has a plurality of formation-interpolation points I, the increase in the amount of the whole link information can be significantly suppressed.

Furthermore, in a piece of density information, the placement density of the formation-interpolation points I disposed in the highest density, i.e., the magnification of the spacing p (for example, by four or eight), can be represented as an exponent (two or three) for the magnification that is defined as a power of two (4 = 2² or 8 = 2³).

Four bits are necessary to represent eight in binary numbers. However, when eight is represented as a power of two, three, which is an exponent of the power of two, can be represented using two bits. In other words, by representing the magnification describing the placement density as an exponent of a power of two, the amount of data can be reduced to one-half. Although only two bits can be reduced for one of the links L, a large positive effect made by the reduction can be obtained for the whole road-map data RD.

In the example described above with reference to Fig. 4, the magnification describing the placement density is only eight or four. When an exponent of a power of two for the magnification is set to one, a placement density with a 2× magnification can be determined. Similarly, when an exponent of a power of two for the magnification is set to zero, a placement density with a 1× magnification can be determined.

As described above, a case in which the accuracy of a source is high and the accuracy level of a piece of link information is high is preferable for disposing the formation-interpolation points I in a high density. Conversely, when the accuracy of a source is low, information obtained from the source is insufficient to dispose the formation-interpolation points I in a high density. In such a case, the formation-interpolation points I can be disposed only at dummy positions to achieve the disposition in a high density. As a result, the amount of a piece of link information is unnecessarily increased. Accordingly, a piece of density information included in a piece of link information is determined on the basis of an accuracy level shown in a piece of accuracy level information.

Fig. 5 is an illustration of an example of the relationship between the source of a piece of link information and an accuracy level or a piece of density information concerning the formation-interpolation points I.

In this example, regarding a piece of link information whose source is the topographic map that is a basic map, the accuracy level 0 is set for a piece of accuracy level information on the basis of the accuracy of the topographic map. With this accuracy level, it is difficult to obtain information sufficient to dispose the formation-interpolation points I in a high density. Accordingly, a piece of density information obtained from the topographic map can be represented as three, which is the exponent of the power of two defining an 8× magnification.

Regarding a piece of link information whose source is the town map, the accuracy level 1 is set for a piece of accuracy level information on the basis of the accuracy of the town map. In this case, the formation-interpolation points I can be disposed in a density higher than that in the case of the piece of link information based on the topographic map. Accordingly, a piece of density information obtained from the town map can be represented as two, which is the exponent of the power of two defining a 4× magnification.

Regarding a piece of link information whose source is the city-planning map, the accuracy level 2 is set for a piece of accuracy level information on the basis of the accuracy of the city-planning map. As in the case of the piece of link information based on the town map, the formation-interpolation points I can be disposed in a density higher than that in the case of the piece of link information based on the topographic map. Accordingly, a piece of density information obtained from the city-planning map can be represented as two, which is the exponent of the power of two defining a 4× magnification.

Regarding a piece of link information whose source is the road map, the accuracy level 3 is set for a piece of accuracy level information on the basis of the accuracy of the road map. The formation-interpolation points I can be disposed in a density much higher than that in the case of the piece of link information based on the town map or the city-planning map. Accordingly, a piece of density information obtained from the road map can be represented as one, which is the exponent of the power of two defining a 2× magnification.

Regarding a piece of link information whose source is the aerial photograph, the accuracy level 4 is set for a piece of accuracy level information on the basis of the accuracy of the aerial photograph. The formation-interpolation points I can be disposed in the highest density. Accordingly, a piece of density information obtained from the aerial photograph can be represented as zero, which is the exponent of the power of two defining a 1× magnification.

Regarding a piece of link information whose source is the measuring vehicle, the accuracy level 5 is set for a piece of accuracy level information on the basis of the measuring vehicle. As in the case of the piece of link information based on the aerial photograph, the formation-interpolation points I can be disposed in the highest density. Accordingly, a piece of density information obtained from the aerial photograph can be represented as zero, which is the exponent of the power of two defining a 1× magnification.

As described above, in the road-map-data configuration according to the embodiment of the present invention, each piece of link information includes a piece of accuracy level information based on the accuracy of a source of the piece of link information and a piece of density information concerning the formation-interpolation points I based on an accuracy level shown in the piece of accuracy level information. The application programs, which run with reference to the road-map data RD having this road-map-data configuration, can be executed on the basis of a required accuracy level necessary for each of the application programs, using the piece of link information including the accuracy level higher than the required accuracy level. Accordingly, the application programs can share the single road-map data, and be executed on an as needed basis, using the appropriate piece of link information. Furthermore, since the navigation apparatus according to the embodiment of the present invention has the road-map-data configuration in which a piece of link information is configured on the basis of the accuracy of a source of the piece of link information or on an as needed basis, the increase in the amount of the road-map data can be suppressed.

### Other Embodiments

In the above-described embodiment, as shown in Fig. 5, the case in which a piece of density information is determined on the basis of an accuracy level shown in a piece of accuracy level information is described as an example. However, for example, in a case in which the links L have a regular formation, such as a line, there is a probability that the formation-interpolation points I do not have to be disposed in a high density even when the accuracy of a source is high. In other words, the disposition of the formation-interpolation points I in a high density for such formations may cause the unnecessary increase in the amount of a piece of link information.

For this reason, a coefficient or an offset value based on the formations of the links L may be given for a piece of density information concerning the formation-interpolation points I. For example, when the links L have a regular formation, such as a line, an offset value 1 may be added to the above-described exponent of the power of two. Steps defined by the offset value 1 and an offset value 2 may be set in accordance with how regular the formations of the links are. It is preferable that the upper limit of the exponent of the power of two be determined. For example, three may be determined as the upper limit of the exponent of the power of two.

As described above, when the piece of density information is determined on the basis of an accuracy level shown in the accuracy of a source and on the basis of the formations of the links L, the increase in the amount of the road-map data can be suppressed in a condition in which a required accuracy level of the road-map data necessary for each of the application programs is maintained.

As described above, according to the embodiments of the present invention, the road-map-data configuration that is capable of including pieces of link information showing a plurality of accuracy levels based on the accuracies of sources to appropriately configure the road-network data and that is capable of using the road-network data on the basis of an accuracy level shown in each of the pieces of link information can be provided.

## Claims

1. A road-map-data configuration comprising:
road-network data representing roads using connection relationships among a plurality of links; and
link information concerning the links used to configure the road-network data, the link information including accuracy level information based on the accuracy of a source of the link information,
**characterised in that** the link information includes density information that is determined on the basis of an accuracy level shown in the accuracy level information and that describes the placement density of shape points for interpolating shapes of the links, and shape point-offset coordinates that are represented using offset values defined between adjacent interpolation-points to show the shapes of the links.

2. The road-map-data configuration according to Claim 1, wherein the accuracy level information is information showing a level value predetermined on the basis of the accuracy of each of various types of sources.

3. The road-map-data configuration according to Claim 1 or 2, wherein the link information includes density information that is determined on the basis of an accuracy level shown in the accuracy level information and on the basis of shapes of the links.

4. The road-map-data configuration according to Claim 1, 2 or 3, wherein the density information is represented using a magnification for the placement density of the shape points disposed in the highest density, and is represented as an exponent for the magnification defined as a power of two.

5. A navigation apparatus (1) comprising:
a map database (2) having the road-map-data configuration according to any one of Claims 1 to 5, the map database (2) storing the road-network data;
an apparatus-location-detection unit (4) that detects a location of the navigation apparatus (1); and
a plurality of application programs (PG) that run with reference to the road-network data, each of the application programs (PG) being executed on the basis of a required accuracy level necessary for the application program, and being executed using the link information having the accuracy level information showing the accuracy level higher than the required accuracy level.

## Patentansprüche

1. Straßenkartendaten-Anordnung mit Straßennetzwerkdaten, die Straßen unter Verwendung von Verbindungsbeziehungen zwischen mehreren Verknüpfungen darstellen; und
Verknüpfungsinformationen bezüglich der Verknüpfungen, die verwendet werden, um die Straßennetzwerkdaten zu konfigurieren, wobei die Verknüpfungsinformationen Genauigkeitsstufeninformationen beinhalten, die auf der Genauigkeit einer Quelle der Verknüpfungsinformationen basieren,
**dadurch gekennzeichnet, dass**
die Verknüpfungsinformationen Dichteinformationen beinhalten, welche auf der Basis einer Genauigkeitsstufe bestimmt werden, die in den Genauigkeitsstufeninformationen dargestellt ist, und welche die Aufstellungsdichte der Formpunkte zum Interpolieren von Formen der Verknüpfungen, und die Formpunktversatz-Koordinaten beschreiben, die unter Verwendung von Versatzwerten, die zwischen benachbarten Interpolationspunkten definiert sind, dargestellt werden, um Formen der Verknüpfungen zu zeigen.

2. Straßenkartendaten-Anordnung nach Anspruch 1, wobei die Genauigkeitsstufeninformationen Informationen sind, die einen auf Basis der Genauigkeit einer jeden von verschiedenen Arten von Quellen vorherbestimmten Stufenwert zeigen.

3. Straßenkartendaten-Anordnung nach Anspruch 1 oder 2, wobei die Verknüpfungsinformationen Dichteinformationen beinhalten, die auf Basis einer in den Genauigkeitsstufeninformationen dargestellten Genauigkeitsstufe und auf Basis von Formen der Verknüpfungen bestimmt werden.

4. Straßenkartendaten-Anordnung nach Anspruch 1, 2 oder 3, wobei die Dichteinformationen unter Verwendung einer Vergrößerung für die Aufstellungsdichte der Formpunkte, die in der höchsten Dichte angeordnet sind, gezeigt werden und die als ein Exponent zur Basis 2 für die Vergrößerung dargestellt werden.

5. Navigationsvorrichtung (1) mit einer Kartendatenbank (2), die eine Straßenkartendaten-Anordnung nach einem der Ansprüche 1 bis 4 aufweist, wobei die Kartendatenbank (2) die Straßennetzwerkdaten speichert;
einer Vorrichtungs-Position-Detektions Einheit (4) die eine Position der Navigationsvorrichtung (1) bestimmt; und
mehreren Anwendungsprogrammen (PG), die mit Bezug auf die Straßennetzwerkdaten laufen, wobei jedes Anwendungsprogramm (PG) auf Basis einer benötigten Genauigkeitsstufe, die notwendig für das Anwendungsprogramm ist, und unter Verwendung der Verknüpfungsinformationen ausgeführt wird, die die Genauigkeitsinformationen enthalten, die die Genauigkeitsstufe zeigen, die höher als die benötigte Genauigkeitsstufe sind.

## Revendications

1. Configuration de données de carte routière comportant :
des données de réseau routier représentant des routes en utilisant des relations de connexion parmi une pluralité de liens ; et
une information de lien concernant les liens utilisés pour configurer les données de réseau routier, l'information de lien comprenant une information de niveau de précision en fonction de la précision d'une source de l'information de lien,
**caractérisée en ce que** l'information de lien comprend une information de densité qui est déterminée en fonction d'un niveau de précision représenté dans l'information de niveau de précision et qui décrit la densité d'emplacement des points de forme pour interpoler les formes des liens, et former les coordonnées de décalage de point qui sont représentées en utilisant des valeurs de décalage définies entre des points d'interpolation adjacents pour montrer les formes des liens.

2. Configuration de données de carte routière selon la revendication 1, dans laquelle l'information de niveau de précision est une information représentant une valeur de niveau prédéterminé en fonction de la précision de chacun des différents types de sources.

3. Configuration de données de carte routière selon la revendication 1 ou 2, dans laquelle l'information de lien comprend une information de densité qui est déterminée en fonction d'un niveau de précision représenté dans l'information de niveau de précision et en fonction des formes des liens.

4. Configuration de données de carte routière selon la revendication 1, 2 ou 3, dans laquelle l'information de densité est représentée en utilisant un agrandissement pour la densité d'emplacement des points de forme disposés selon la densité la plus élevée, et est représentée en tant qu'exposant pour l'agrandissement défini en tant que puissance de 2.

5. Appareil de navigation (1) comportant :
une base de données de carte (2) possédant la configuration de données de carte routière selon l'une quelconque des revendications 1 à 4, la base de données de carte (2) mémorisant les données de réseau routier ;
une unité de détection d'emplacement d'appareil (4) qui détecte un emplacement de l'appareil de navigation (1) ; et
une pluralité de programmes d'application (PG) qui fonctionnent en référence aux données de réseau routier, chacun des programmes d'application (PG) étant exécuté en fonction d'un niveau de précision requis nécessaire pour le programme d'application, et étant exécuté en utilisant l'information de lien possédant l'information de niveau de précision présentant un niveau de précision plus élevé que le niveau de précision requis.
